# EUROPÄISCHE PATENTANMELDUNG

(11) **EP 3 012 965 A1**
(43) Veröffentlichungstag der Anmeldung: **27.04.2016**
(21) Anmeldenummer: 15189080.3
(22) Anmeldetag: 09.10.2015
(51) Int. Cl.: H02P 25/22, H02P 3/04, H02P 3/18, A62C 2/10, H02K 49/00

(54) **BRAND- ODER RAUCHSCHUTZVORRICHTUNG**

(30) Priorität: 09.10.2014 DE 102014014746
(71) Anmelder: Stöbich Brandschutz GmbH, 38644 Goslar (DE)
(72) Erfinder: Wegner, Thomas, 04828 Bennewitz (DE); Balzer, Norbert, 38667 Bad Harzburg (DE); Tappe, Stefan, 38704 Liebenburg (DE)
(74) Vertreter: Plöger, Jan Manfred

(57) **Zusammenfassung**

Die Erfindung betrifft eine Brand- oder Rauchschutzvorrichtung (10) mit einem Schutzelement (16), einem Motor (20), der zum Bewegen des Schutzelements (16) angeordnet ist und zumindest zwei Motor-Wicklungsstränge (36) aufweist, und einem Bremsgenerator (28), der eingerichtet ist zum Bremsen des Schutzelements (16) und zumindest einen Brems-Wicklungsstrang (38) umfasst. Erfindungsgemäß ist vorgesehen, dass zumindest ein Bremswicklungsstrang (38) galvanisch von allen Motor-Wicklungssträngen (36) getrennt ist.

## Beschreibung

Die Erfindung betrifft eine Brand- oder Rauchschutzvorrichtung mit (a) einem Schutzelement, (b) einem Motor, der zum Bewegen des Schutzelements angeordnet ist und zumindest zwei Motor-Wicklungsstränge aufweist, und (c) einem Bremsgenerator, der eingerichtet ist zum Bremsen des Schutzelements und zumindest einen Brems-Wicklungsstrang umfasst.

Eine derartige Brand- oder Rauchschutzvorrichtung ist aus der DE 10 2008 034 321 B4 bekannt. Bei der dort beschriebenen Ausführungsform werden ein Wechselstrommotor und ein Gleichstrommotor auf einer gemeinsamen Welle angeordnet. Soll im Brandfall das Schutzelement zugefahren werden, obwohl der Strom ausgefallen ist, rollt das Schutzelement zunächst frei ab. Der Gleichstrommotor erzeugt dabei elektrischen Strom, mit dem eine Betriebsstrombremse mit elektrischer Energie versorgt wird. Auf diese Weise wird erreicht, dass das Schutzelement eine vorgegebene Fallgeschwindigkeit nicht überschreitet. Nachteilig an einem derartigen System ist der vergleichsweise große konstruktive Aufwand.

Aus der DE 197 16 547 C2 ist ein Antrieb für Rauchschutzvorhänge bekannt, der einen Asynchronmotor umfasst. Bei Stromausfall fällt das Schutzelement herunter und der Asynchronmotor arbeitet als Generator. Zum Bremsen der Abwärtsbewegung werden Kondensatoren zwischen den Motorklemmen des Asynchronmotors geschaltet, die mit den Wicklungen des Asynchronmotors einen Schwingkreis bilden. Erhöht sich die Drehzahl des Asynchronmotors immer weiter, so kommt der so gebildete Schwingkreis in die Nähe seiner Resonanzfrequenz. Daraus resultiert ein Bremsmoment, so dass das abrollende Schutzelement eine vorgegebene Geschwindigkeit nicht überschreitet. Nachteilig an diesem System ist der vergleichsweise hohe Aufwand, der notwendig ist um sicherzustellen, dass die Kondensatoren im Falle eines Stromausfalls sicher zwischen den Motorklemmen des Asynchronmotors geschaltet werden, da anderenfalls die Bremswirkung nicht garantiert ist.

Aus der DE 196 10 876 C2 ist eine Bremsvorrichtung für einen Rauchschutzvorhang bekannt, bei der eine Reibbremse verwendet wird, um ein kontrolliertes Absenken des Brandschutzvorhangs zu gewährleisten. Nachteilig an einem derartigen System ist, dass eine derartige Reibbremse verschleißbehaftet ist und daher gewartet werden muss.

Der Erfindung liegt die Aufgabe zugrunde, Nachteile im Stand der Technik zu vermindern.

Die Erfindung löst das Problem durch eine Brand- oder Rauchschutzvorrichtung mit den Merkmalen von Anspruch 1.

Günstig ist es, wenn die Motor-Polpaarzahl des Motors größer ist als eine Brems-Polpaarzahl des Bremsgenerators.

Vorteilhaft an einem solchen System ist, dass es inhärent sicher herstellbar ist. Beispielweise kann der Bremsgenerator gemäß einer bevorzugten Ausführungsform vorgesehene Kondensatoren aufweisen, die - beispielsweise zwischen die Motorklemmen des Asynchronmotors - so geschaltet sind, dass sich ein Schwingkreis bildet, der dazu führt, dass eine Drehfrequenz des Bremsgenerators eine vorgegebene Grenz-Drehfrequenz nicht überschreitet. Da diese Kondensatoren fest mit dem Bremsgenerator verbunden sein können, sind Schalter entbehrlich, die Versagenswahrscheinlichkeit des Systems ist daher in guter Näherung Null.

Vorteilhaft an dem System ist zudem, dass es besonders einfach aufgebaut ist. So ist eine zusätzliche Reibbremse entbehrlich.

Günstig ist zudem, dass der Motor und der Bremsgenerator, wie gemäß einer bevorzugten Ausführungsform vorgesehen, ineinander geschachtelt ausgeführt sein können. Es reicht daher eine Baugruppe aus, um das Schutzelement im regulären Betrieb zu bewegen und zudem im Falle eines Stromausfalls sicher abzusenken.

Es ist ein weiterer Vorteil, dass das System relativ zur Öffnungsgeschwindigkeit schnell geschlossen werden kann. Bei Brand- oder Rauchschutzvorrichtungen ist die Geschwindigkeit, mit der das Schutzelement zugefahren können werden muss, in aller Regel vorgegeben. Die Geschwindigkeit, mit der das Schutzelement aufgefahren wird, ist hingegen weniger relevant. Der Motor kann daher beim Auffahren des Schutzelements mit einer Drehfrequenz betrieben werden, die so klein ist, dass der Bremsgenerator keine oder nur eine ausreichend kleine Bremswirkung entfaltet. Er kann daher trotz des Vorhandenseins des Bremsgenerators einfach betrieben werden. Dazu reicht beispielsweise ein einfacher Schalter aus.

Im Rahmen der vorliegenden Beschreibung wird unter dem Schutzelement ein Bauteil verstanden, mittels dem die Ausbreitung eines Brandes und/oder von Rauch verhinderbar oder unterbindbar ist. Beispielsweise umfasst das Schutzelement ein Brandschutztextil. Unter einem Brandschutztextil wird ein Gewebe, Gelege, Gewirk und/oder Vlies aus feuerbeständigem Fasermaterial verstanden. Beispielsweise kann das Brandschutztextil Glasfasern und/oder Metalldrähte umfassen.

Unter dem Merkmal, dass der Bremswicklungsstrang galvanisch von allen Motor-Wicklungssträngen getrennt ist, wird insbesondere verstanden, dass keine elektrisch leitende Verbindung zwischen dem Bremswicklungsstrang und einem Motor-Wicklungsstrang existiert. Insbesondere ist der Bremswicklungsstrang relativ zu allen Motor-Wicklungssträngen potentialfrei.

Das Schutzelement kann in eine Lagerstellung gebracht werden, in der es kompakt angeordnet ist, und in eine Schließstellung, in der es die Ausbreitung eines Brandes und/oder von Rauch behindert oder unterbindet.

Die Begriffe "Motor-Wicklungsstrang" und "Brems-Wicklungsstrang" dienen der sprachlichen Unterscheidung der Wicklungsstränge von Motor und Bremsgenerator, eine darüber hinausgehende funktionelle Beschränkung ist mit den Begriffen nicht verbunden.

Gemäß einer bevorzugten Ausführungsform ist das Schutzelement auf einer Wickelwelle aufgewickelt, wobei der Motor zum Drehen der Wickelwelle ausgebildet ist und/oder der Bremsgenerator zum Bremsen der Wickelwelle. Es ist aber auch möglich, dass das Schutzelement in der Lagerstellung gerafft und/oder gefaltet ist. Beispielsweise umfasst die Brand- oder Rauchschutzvorrichtung eine Gondel, auf der das Schutzelement gerafft und/oder gefaltet vorliegt, wenn das Schutzelement in seiner Lageranordnung ist. In diesem Fall ist der Motor so ausgebildet, dass er die Gondel bewegen kann, wobei durch Bewegen der Gondel das Schutzelement aus der Lageranordnung in die Schutzanordnung und umgekehrt bringbar ist.

Vorzugsweise sind alle Brems-Wicklungsstränge von allen Motor-Wicklungssträngen galvanisch getrennt. In anderen Worten existiert in diesem Fall kein Brems-Wicklungsstrang, der galvanisch mit einem Motor-Wicklungsstrang verbunden ist. Selbstverständlich ist es möglich, dass dabei die Motor-Wicklungsstränge galvanisch miteinander verbunden sind. Ein derartiges System ist besonders robust und wenig fehleranfällig.

Vorzugsweise ist der Motor ein Asynchronmotor. Ein derartiger Motor ist robust und leicht anzusteuern.

Günstig ist es, wenn der Motor und/oder der Bremsgenerator Außenläufer sind. In anderen Worten sind die unbestromten Bestandeile, insbesondere der Käfig, radial außerhalb der Wicklungsstränge angeordnet.

Besonders günstig ist es, wenn der Bremsgenerator ein Asynchrongenerator ist, vorzugsweise ein kondensatorerregter Asynchrongenerator. Bei einem kondensatorerregten Asynchrongenerator führt die Remanenz dazu, dass bei niedrigen Drehfrequenzen der Kondensator wenig geladen wird. Bei höherer Drehfrequenz bewirkt der Kondensator eine stärkere Erregung und damit - wegen des unvermeidlichen ohmschen Widerstands im Asynchrongenerator - eine erhöhte Bremswirkung. Mit weiter zunehmender Drehfrequenz steigt das vom Bremsgenerator erzeugte Brems-Drehmoment immer weiter an und erreicht schließlich das von der Gewichtskraft des Schutzelements hervorgerufene Antriebsmoment. Die Geschwindigkeit, mit der das Schutzelement sich bewegen kann, wird so vom Bremsgenerator nach oben begrenzt.

Gemäß einer bevorzugten Ausführungsform umfasst der Bremsgenerator zumindest einen Schwingkreis, der eine Kapazität, insbesondere einen Kondensator, und zumindest einen Brems-Wicklungsstrang umfasst, wobei der Schwingkreis eine Eigen-Drehfrequenz hat, und wobei die Eigen-Drehfrequenz größer ist als eine Nenn-Drehfrequenz des Motors, insbesondere größer als das 1,2-fache der Nenn-Drehfrequenz des Motors. Jeder Brems-Wicklungsstrang hat eine Induktivität. Dadurch, dass zumindest ein Brems-Wicklungsstrang mit einer Kapazität verbunden ist, entsteht ein elektrischer Schwingkreis, der eine Eigenfrequenz besitzt. Diese Eigenfrequenz entspricht einer Eigen-Drehfrequenz. Die Eigen-Drehfrequenz ist diejenige Drehfrequenz des Bremsgenerators, bei der dieser das maximale Brems-Drehmoment erzeugt.

Die Nenn-Drehfrequenz ist diejenige Drehfrequenz des Motors, mit der der Motor im lastfreien Zustand dreht. Wenn es sich bei dem Motor um einen Asynchronmotor handelt, ist die Nenn-Drehfrequenz gleich der Synchron-Drehfrequenz. Die Drehfrequenz ist die Zahl der Umdrehungen pro Sekunde. Besonders günstig ist es, wenn die Eigen-Drehfrequenz zumindest das 1,5-fache, insbesondere das 1,8-fache, der Nenn-Drehfrequenz des Motors beträgt. Besonders günstig ist es, wenn die Eigen-Drehfrequenz im Wesentlichen dem Doppelten der Nenn-Drehfrequenz des Motors entspricht. Das ist insbesondere dann der Fall, wenn die Motor-Polpaarzahl das Doppelte der Brems-Polpaarzahl beträgt.

Gemäß einer bevorzugten Ausführungsform umfasst der Bremsgenerator drei Brems-Wicklungsstränge und zumindest eine Kapazität, insbesondere drei Kapazitäten, insbesondere Kondensatoren, wobei jeder Brems-Wicklungsstrang mit einer Kapazität verbunden ist, sodass sich je ein Schwingkreis ergibt. Besonders günstig ist es, wenn sich die Eigenfrequenzen der so entstehenden drei Schwingkreise voneinander um höchstens 25 % unterscheiden. Hierunter ist zu verstehen, dass der Quotient aus dem Minimum aller Drehfrequenzen als Zähler und dem Maximum aller Drehfrequenzen als Nenner zumindest 0,75 beträgt.

Vorzugsweise umfasst der Motor eine Ansteuereinheit, die eingerichtet ist zum Antreiben des Motors mit der Nenn-Frequenz. Im einfachsten Fall handelt es sich bei der Ansteuereinheit um einen Schalter. Es ist aber auch möglich, dass die Ansteuereinheit einen Frequenzumrichter umfasst. In diesem Fall ist die Ansteuereinheit vorzugsweise ausgebildet zum Bestromen des Motors mit einer Frequenz, die höchstens dem 0,8-fachen, insbesondere höchstens der Hälfte, der Eigen-Drehfrequenz entspricht. Existieren mehrere Eigen-Drehfrequenzen, bezieht sich diese Angabe auf die kleinste der Eigen-Drehfrequenzen.

Vorzugsweise sind die Schwingkreise dauerhaft geschaltet. In anderen Worten enthält der Schwingkreis keinen Schalter oder ein etwaig vorhandener Schalter ist stets geschlossen oder so ausgebildet, dass er im Falle eines Stromausfalls selbsttätig schließt. So ist der Bremsgenerator eigensicher.

Günstig ist es, wenn der Bremsgenerator bei Nenn-Frequenz des Motors ein Brems-Drehmoment erzeugt, das höchstens einem Fünftel, insbesondere höchstens einem Zehntel, des Maximal-Drehmoments des Bremsgenerators entspricht. Das stellt sicher, dass das Vorhandensein des Bremsgenerators den Motor nicht oder nur unwesentlich belastet.

Günstig ist, wenn der Motor einen Rotor umfasst, der zugleich als Rotor des Bremsgenerators wirkt. Handelt es sich bei dem Motor und bei dem Bremsgenerator um Asynchronmaschinen, so wird hierunter insbesondere verstanden, dass der Motor im Rotor einen elektrischen Strom induziert, wobei durch die gleichen Komponenten des Rotors ein elektrischer Strom fließt, wenn der Bremsgenerator aktiviert ist. Vorzugsweise handelt es sich bei dem Motor um einen Asynchronmotor mit Kurzschlussläufer.

Gemäß einer bevorzugten Ausführungsform ist die Motor-Polpaarzahl des Motors kleiner oder gleich der Brems-Polpaarzahl des Bremsgenerators, beispielsweise kann die Motor-Polpaarzahl gleich der Brems-Polpaarzahl sein. In diesem Fall ergibt sich eine besonders einfache Bauform. Es ist dann, wenn die Motor-Polpaarzahl des Motors kleiner oder gleich der Brems-Polpaarzahl ist, besonders vorteilhaft, wenn die Eigen-Drehfrequenz des Bremsgenerators größer ist als die Nenn-Drehfrequenz des Motors. Das kann beispielsweise durch geeignete Wahl der Kapazität im Schwingkreis erreicht werden.

Ein unabhängiger Gegenstand der vorliegenden Anmeldung ist eine Brand- oder Rauchschutzvorrichtung mit (a) einem Schutzelement, (b) einem Motor, der zum Bewegen des Schutzelements angeordnet ist und zumindest zwei Motor-Wicklungsstränge aufweist, und (c) einem Bremsgenerator, der eingerichtet ist zum Bremsen des Schutzelements und zumindest einen Brems-Wicklungsstrang umfasst, wobei (d) eine Motor-Polpaarzahl des Motors größer ist als eine Brems-Polpaarzahl des Bremsgenerators. Die oben genannten bevorzugten Ausführungsformen gelten, soweit anwendbar, auch für diese Erfindung. Vorzugsweise ist im Rahmen dieser Erfindung zumindest ein Bremswicklungsstrang galvanisch von allen Motor-Wicklungssträngen getrennt.

Erfindungsgemäß ist zudem ein Gebäude mit einem ersten Gebäudeabschnitt, einem zweiten Gebäudeabschnitt und einer erfindungsgemäßen Brand- oder Rauchschutzvorrichtung, die die Ausbreitung eines Brandes und/oder von Rauch von dem ersten Gebäudeabschnitt in den zweiten Gebäudeabschnitt unterbindet oder behindert.

Im Folgenden wird die Erfindung anhand der beigefügten Zeichnungen näher erläutert. Dabei zeigt
- Figur 1: die Ansicht einer erfindungsgemäßen Brand- oder Rauchschutzvorrichtung,
- Figur 2: eine schematische Ansicht durch eine Wickelwelle der Brand- oder Rauchschutzvorrichtung,
- Figur 3: einen schematischen Schnitt senkrecht zur Längsachse der Wickelwolle durch den Motor und den Bremsgenerator und
- Figur 4: einen Schaltplan für eine Motor-/Bremsgeneratoreinheit, die den Motor und den Bremsgenerator umfasst.
- Figur 5: zeigt die Abhängigkeit des Brems-Drehmoments des Bremsgenerators von dessen Drehfrequenz.

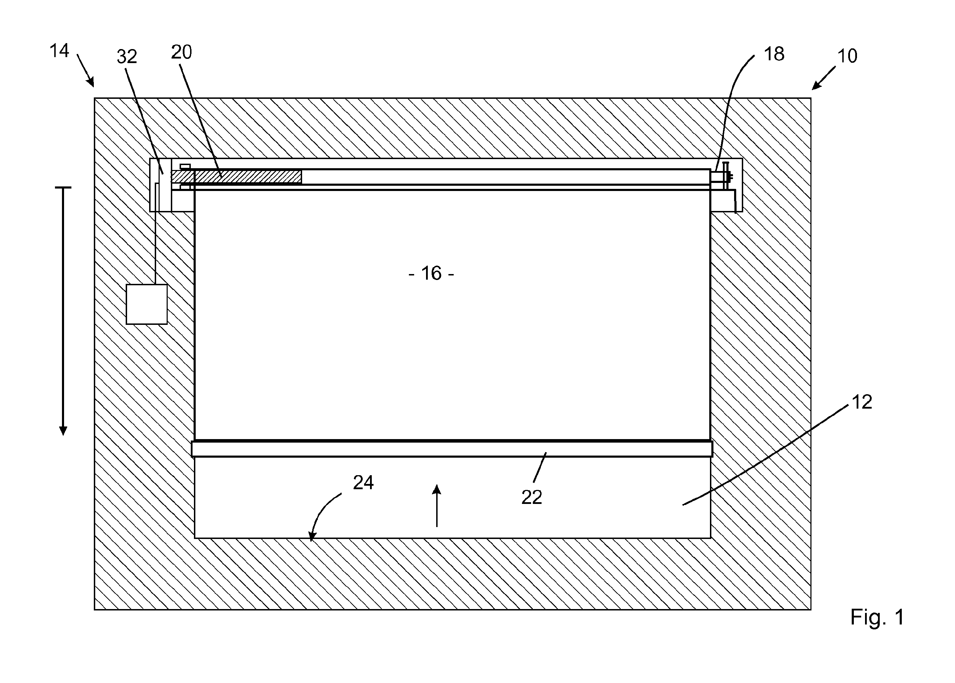

Figur 1 zeigt eine erfindungsgemäße Brand- oder Rauchschutzvorrichtung 10, die in einer Gebäudeöffnung 12 eines erfindungsgemäßen Gebäudes 14 montiert ist. Die Brand- oder Rauchschutzvorrichtung 10 umfasst ein Schutzelement 16 aus einem Brandschutztextil, das auf eine Wickelwelle 18 aufwickelbar angeordnet ist.

Die Wickelwelle 18 ist von einem Motor 20 drehantreibbar, der, was eine bevorzugte Ausführungsform darstellt, als Rohrmotor ausgebildet ist. Mittels des Motors 20 kann das Schutzelement 16 in eine Lagerstellung gebracht werden, in der das Schutzelement 16 auf die Wickelwelle 18 aufgewickelt ist. In diesem Fall ist eine Fußleiste 22 in einer oberen Stellung.

Mittels des Motors 20 kann das Schutzelement 16 zudem in eine Schließstellung gebracht werden, bei der es die Gebäudeöffnung 12 verschließt. Die Fußleiste 22 liegt dann auf einem Boden 24 auf. Das Schutzelement 16 trennt damit einen ersten Gebäudeabschnitt, der in Figur 1 oberhalb der Papierebene liegt, von einem zweiten Gebäudeabschnitt, der unterhalb der Papierebene liegt.

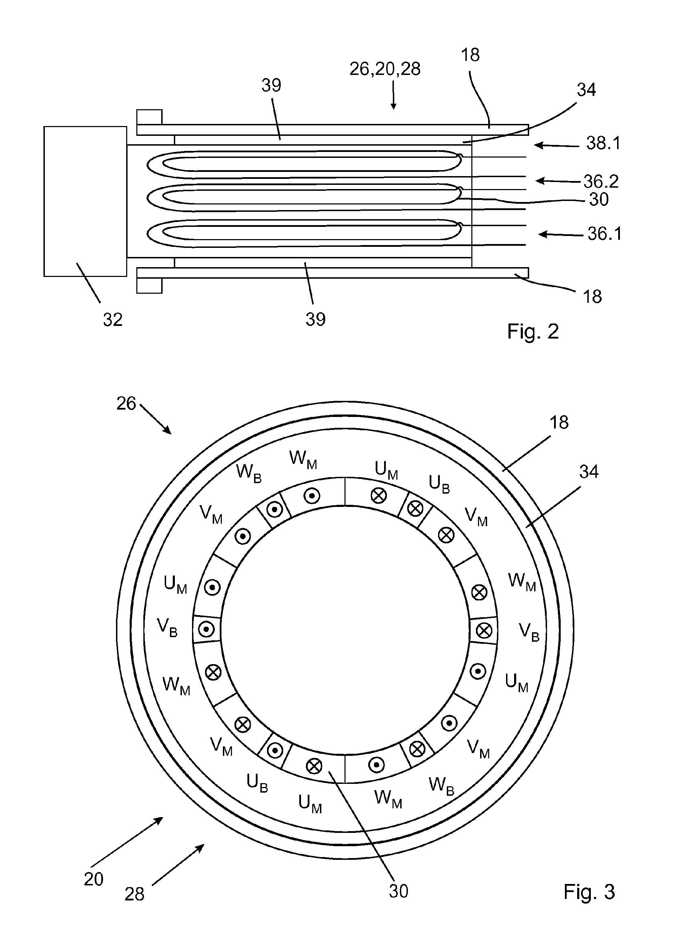

Figur 2 zeigt einen schematischen Schnitt durch eine Motor-/Bremsgeneratoreinheit 26, die neben dem Motor 20 einen Bremsgenerator 28 besitzt, der weiter unten näher erläutert wird. Es ist zu erkennen, dass die Motor-/Bremsgeneratoreinheit 26 und damit sowohl der Motor 20 als auch der Bremsgenerator 28 einen innenliegenden Rotor 30 aufweist, der jedoch drehfest mit einer Verankerung 32 verbunden ist. Die Bezeichnung als Rotor wurde lediglich gewählt, da üblicherweise der Rotor radial innen angeordnet ist. In anderen Worten handelt es sich sowohl beim Motor 20 als auch beim Bremsgenerator 28 um Außenläufer. Alternativ können der Motor 20 und/oder der Bremsgenerator 28 ein Innenläufer sein. Die Motor-/Bremsgeneratoreinheit 26 umfasst zudem einen Stator 34, der mit der Wickelwelle 18 drehfest verbunden ist.

In Figur 2 sind schematisch ein erster Motor-Wicklungsstrang 36.1, ein zweiter Motor-Wicklungsstrang 36.2 sowie ein Brems-Wicklungsstrang 38 eingezeichnet, die Teil des radial innen liegenden Rotors 30 ist. Der radial außen liegende Stator 34 enthält einen Kurzschlussläufer 39 mit kurzgeschlossenen Eisenblechen.

Figur 3 zeigt einen Querschnitt durch die Motor-/Bremsgeneratoreinheit 26. Es ist zu erkennen, dass der Motor 20 drei Motor-Wicklungsstränge aufweist, die als (36.1=) UM, (36.2=) V_{M} und (36.3=) W_{M} bezeichnet sind. Der Bremsgenerator 28 besitzt drei Brems-Wicklungsstränge U_{B}, V_{W}, W_{B}.

Es ist zu erkennen, dass der Motor 20 eine Motor-Polpaarzahl p_{M} = 4 hat, wohingegen der Bremsgenerator 28 eine Brems-Polpaarzahl p_{B} = 2 hat. Damit die Motor-Polpaarzahl doppelt so groß wie die Brems-Polpaarzahl, es gilt p_{M} = 2*p_{B}.

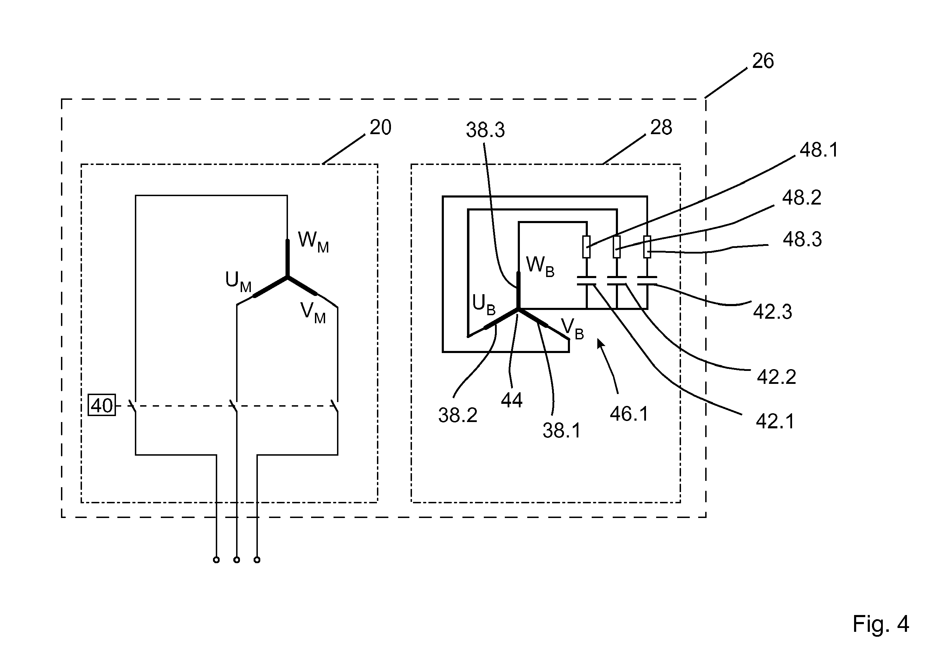

Figur 4 zeigt ein schematisches Schaltbild für die Motor-/Bremsgeneratoreinheit 26. Es ist zu erkennen, dass der Motor 20 über eine Ansteuereinheit 40 in Form eines Schützes 40 an- und ausgeschaltet werden kann. Der Motor 20 ist ein Asynchronmotor mit außen laufendem, kurzgeschlossenem Käfig.

Der Bremsgenerator 28 umfasst drei Kapazitäten 42.1, 42, 2, 42.3 in Form von Kondensatoren. Jeder einzelne Kondensator 42 ist mit genau einem Brems-Wicklungsstrang verbunden, so dass jeweils ein Schwingkreis 46 gebildet wird. So sind der erste Brems-Wicklungsstrang 38.1 und der erste Kondensator 42.1 Teil eines Schwingkreises 46.1.

Es ist möglich, nicht aber notwendig, dass jeder Schwingkreis ein ohmsches Widerstandselement 48 umfasst. Jeder Schwingkreis 46 (Bezugszeichen ohne Zählsuffix beziehen sich jeweils auf alle entsprechenden Objekte) hat eine Eigenfrequenz f*, die aus der Induktivität des jeweiligen Wicklungsstrangs, der Kapazität des jeweiligen Kondensators sowie, sofern vorhanden, dem ohmschen Widerstand R des Widerstandselements berechnet werden kann. Dieser Eigenfrequenz f* entspricht eine Eigen-Drehfrequenz n*, die diejenige Drehfrequenz des Bremsgenerators 28 bezeichnet, bei der das Drehmoment maximal ist.

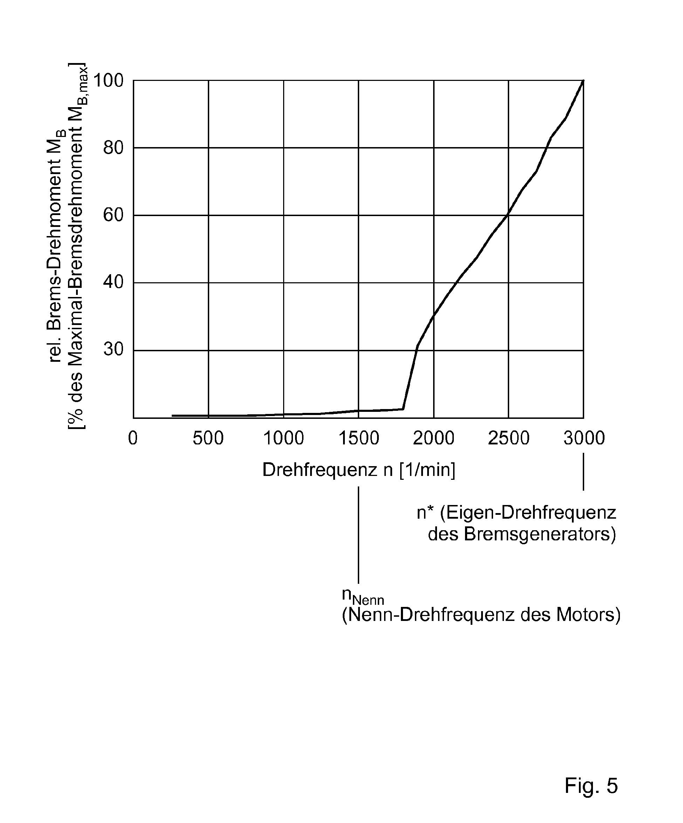

Figur 5 zeigt die Abhängigkeit des Brems-Drehmoments M_{B} des Bremsgenerators von der Drehfrequenz n. Es ist zu erkennen, dass das Brems-Drehmoment M_{B} bei kleiner Drehfrequenz n des Bremsgenerators sehr klein ist. Da die Motor-Polpaarzahl p_{M} im vorliegenden Fall p_{M} = 4 beträgt, ist die Nenn-Drehfrequenz des Motors nnenn = 1500 Umdrehungen pro Minute. Bei dieser Drehfrequenz liegt das Brems-Drehmoment M_{B} bei einem Hundertstel des Maximal-Bremsdrehmoments M_{B,max}, das bei 3000 Umdrehungen pro Minute anliegt. Bei noch höheren Drehfrequenzen würde das Brems-Drehmoment M_{B} wieder abfallen.

### Bezugszeichenliste

| | | | |
|---|---|---|---|
| 10 | Brand- oder Rauchschutzvorrichtung | UM, V_{M},W_{M} | Motorwicklung |
| 12 | Gebäudeöffnung | pₙ | Motor-Polpaarzahl |
| 14 | Gebäude | p_{B} | Brems-Polpaarzahl |
| 16 | Schutzelement | f* | Eigenfrequenz |
| 18 | Wickelwelle | n* | Eigen-Drehfrequenz |
| | | M_{B} | Brems-Drehmoment |
| 20 | Motor | nₙₑₙₙ | Nenn-Drehfrequenz |
| 22 | Fußleiste | | |
| 24 | Boden | | |
| 26 | Motor-/Bremsgeneratoreinheit | | |
| 28 | Bremsgenerator | | |
| | | | |
| 30 | Rotor | | |
| 32 | Verankerung | | |
| 34 | Stator | | |
| 36 | Motor-Wicklungsstrang | | |
| 38 | Brems-Wicklungsstrang | | |
| 39 | Kurzschlussläufer | | |
| | | | |
| 40 | Schütz | | |
| 42 | Kapazität | | |
| 44 | Sternpunkt | | |
| 46 | Schwingkreis | | |
| 48 | Widerstandselement | | |

## Patentansprüche

1. Brand- oder Rauchschutzvorrichtung (10) mit
(a) einem Schutzelement (16),
(b) einem Motor (20), der
- zum Bewegen des Schutzelements (16) angeordnet ist und
- zumindest zwei Motor-Wicklungsstränge (36) aufweist, und
(c) einem Bremsgenerator (28), der
- eingerichtet ist zum Bremsen des Schutzelements (16) und
- zumindest einen Brems-Wicklungsstrang (38) umfasst,
**dadurch gekennzeichnet, dass**
(d) zumindest ein Bremswicklungsstrang (38) galvanisch von allen Motor-Wicklungssträngen (36) getrennt ist.

2. Brand- oder Rauchschutzvorrichtung nach Anspruch 1, **dadurch gekennzeichnet, dass**
eine Motor-Polpaarzahl des Motors (20) größer ist als eine Brems-Polpaarzahl des Bremsgenerators (28).

3. Brand- oder Rauchschutzvorrichtung nach Anspruch 1 oder 2, **dadurch gekennzeichnet, dass** alle Brems-Wicklungsstränge (38) von allen Motor-Wicklungssträngen (36) galvanisch getrennt sind.

4. Brand- oder Rauchschutzvorrichtung nach einem der vorstehenden Ansprüche, **dadurch gekennzeichnet, dass**
- der Motor (20) ein Asynchronmotor ist und/oder
- der Bremsgenerator (28) einen kondensatorerregten Asynchrongenerator bildet.

5. Brand- oder Rauchschutzvorrichtung nach einem der vorstehenden Ansprüche, **dadurch gekennzeichnet, dass**
(a) der Bremsgenerator (28) zumindest einen Schwingkreis (46) umfasst, der
- eine Kapazität (42), insbesondere einen Kondensator (52), und
- zumindest einen Brems-Wicklungsstrang (38) umfasst und
- eine Eigen-Drehfrequenz (n*) hat, und dass
(b) die Eigen-Drehfrequenz (n*) größer ist als eine Nenn-Drehfrequenz (nₙₑₙₙ) des Motors.

6. Brand- oder Rauchschutzvorrichtung nach Anspruch 5, **dadurch gekennzeichnet, dass** der Bremsgenerator (28)
(a) drei Brems-Wicklungsstränge (38) und
(b) drei Kapazitäten (42), insbesondere Kondensatoren, aufweist,
(c) wobei jeder Brems-Wicklungsstrang (38) mit einer Kapazität (42) verbunden ist, so dass sich je ein Schwingkreis (46) ergibt.

7. Brand- oder Rauchschutzvorrichtung nach einem der vorstehenden Ansprüche, **dadurch gekennzeichnet, dass**
der Motor eine Ansteuereinheit aufweist, die eingerichtet ist zum Antreiben des Motors (20) mit der Nenn-Frequenz.

8. Brand- oder Rauchschutzvorrichtung nach einem der vorstehenden Ansprüche, **dadurch gekennzeichnet, dass**
der Bremsgenerator (28) bei Nenn-Drehfrequenz (nₙₑₙₙ) des Motors (20) ein Brems-Drehmoment (M_{B}) erzeugt, das höchstens einem Fünftel, insbesondere höchstens einem Zehntel, eines maximalen Brems-Drehmoments des Bremsgenerators (28) entspricht.

9. Brand- oder Rauchschutzvorrichtung nach einem der vorstehenden Ansprüche, **dadurch gekennzeichnet, dass**
der Motor (20) einen Rotor (30) umfasst, der zugleich als Rotor des Bremsgenerators (28) wirkt.

10. Gebäude mit
- einem ersten Gebäudeabschnitt,
- einem zweiten Gebäudeabschnitt und
- einer Brand- oder Rauchschutzvorrichtung (10) nach einem der vorstehenden Ansprüche, die angeordnet ist zum Verhindern einer Ausbreitung eines Brandes und/oder von Rauch von dem ersten Gebäudeabschnitt in den zweiten Gebäudeabschnitt.
